Europäisches Patentamt

European Patent Office

Office européen des brevets

(11) Publication number: **0 086 309**
**B1**

(12) **EUROPEAN PATENT SPECIFICATION**

(45) Date of publication of patent specification: **30.07.86**

(21) Application number: **82306949.7**

(22) Date of filing: **24.12.82**

(51) Int. Cl.⁴: **C 07 C 69/75,** C 07 C 67/26, C 08 G 18/42, C 08 G 18/32, C 09 D 3/72, C 09 D 3/52

(54) Coating compositions and polyhydroxy oligomer precursor therefor.

(30) Priority: **28.12.81 US 334801**
**28.12.81 US 334802**

(43) Date of publication of application:
**24.08.83 Bulletin 83/34**

(45) Publication of the grant of the patent:
**30.07.86 Bulletin 86/31**

(84) Designated Contracting States:
**DE FR GB**

(56) References cited:
**EP-A-0 014 808**
**FR-A-1 500 356**
**GB-A-2 068 000**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Chattha, Mohinder Singh**
**33466 Vargo**
**Livonia Michigan 48152 (US)**

(74) Representative: **Drakeford, Robert William et al**
**Ford Motor Company Limited 15/448, Research & Engineering Centre Laindon**
**Basildon Essex SS15 6EE (GB)**

Courier Press, Leamington Spa, England.

## Description

This invention relates to coating compositions and polyhydroxy oligomer precursors therefor.

Because of increasingly strict solvent emissions regulations in recent years, low solvent emission paints have become very desirable. A number of high solids paint compositions have been proposed to meet these low solvent emission requirements. However, many of these compositions are deficient because of difficulty in application, slow curing rates, lack of flexibility, poor durability and low solvent and water resistance.

EP—A—14808 discloses a coating composition which comprises a polyhydroxy oligomer having a number average molecular weight ($\bar{M}_n$) of between 150 and 3000 and being the reaction product of a carboxylic acid and an epoxide, and a polyisocyanate crosslinking agent.

According to the present invention, there is provided a coating composition, which preferably contains at least 60% by weight, more preferably greater than 70% by weight, of nonvolatile solids, and which comprises:—

(A) a polyhydroxy oligomer having a number average ($\bar{M}_n$) molecular weight of from 300 to 2000 and being the reaction product of:—

(i) an acid ester made by reacting:—
  (a) a $C_3$—$C_{10}$ aliphatic branched diol, and
  (b) an alkyl hexahydrophthalic anhydride, wherein (a) and (b) are combined in the reaction mixture in amounts sufficient to result in reaction in a molar ratio of greater than 1:1 up to 1:2; and
(ii) a monoepoxide $C_2$—$C_{10}$ monomer,

wherein the monomer is included in amount sufficient to provide reaction of about 1.0 epoxide group for each acid group of the acid ester;

(B) a crosslinking agent; and

(C) 0—50 weight percent based on the total weight of (A), (B) and

(C) of a hydroxy functional additive having a number average molecular weight ($M_n$) of between about 150—6000, preferably between about 500—2500.

The crosslinking agent (B) may comprise an amine-aldehyde or a polyisocyanate.

The amine-aldehyde crosslinking agent is included in the composition in an amount sufficient to provide at least 0.60, preferably from 0.75 to 3.75, equivalents of nitrogen crosslinking functionality for each equivalent of hydroxyle functionality included in the composition either on the polyhydroxy oligomer (A) or as a hydroxyl group of the hydroxy functional additive (C). The polyisocyanate crosslinking agent is included in the composition in an amount sufficient to provide from 0.5 to 1.6 reactive isocyanate groups per hydroxyl group present either on the oligomer (A) or on the additive (C).

The oligomers of this composition are compatible, in particular, with low molecular weight hydroxy functional acrylics. In addition, the coating composition of this invention may include conventional additives such as catalysts, antioxidants, U.V. absorbers, flow control or wetting agents, antistatic agents, pigments, plasticizers, solvents, etc. The oligomers of this composition are also compatible with nonaqueous dispersions (NAD's), which are generally used as flow control additives.

The invention also includes the polyhydroxy oligomer (A) described above.

The preferred oligomer is a dihydroxy oligomer which is the reaction product of a monoepoxide $C_2$—$C_{10}$ monomer having no hydroxyl functionality.

The preferred coating compositions of this invention provide a system which is particularly suitable for those applications requiring a coating having high gloss, hardness, durability and high solvent and water resistance as well as low temperature cure. The desirable characteristics of the coating composition of this invention, in particular, the excellent physical properties and weatherability, are believed to result from the steric hindrance to hydrolysis afforded the ester groups of the oligomer by the alkyl group of the anhydride. However, while this theory has been advanced to explain the excellent durability of this coating composition, neither its validity not its understanding is necessary for the practice of the invention.

Each of the components of the coating composition, the amounts of each of the components required to achieve the desired results of the inventoin and a method for applying the composition are described hereinafter in greater detail.

### Polyhydroxy oligomers

A principal material in the coating of this invention is a polyhydroxy oligomer having a number average ($\bar{M}_n$) molecular weight between about 300 and about 2000, more preferably between about 700 and about 1500. The oligomer is prepared by first combining a low molecular weight $C_3$—$C_{10}$ aliphatic branched diol with an alkyl hexahydrophthalic anhydride in the reaction mixture in amounts sufficient to result in reaction in a molar ratio of greater than 1:1 up to 1:2 to form an acid ester, i.e., some, preferably all, of this ester will be a dicarboxylic acid ester. A slight excess of anhydride may be used over that actually required for the reaction with the diol. This ester is subsequently reacted with a monoepoxide $C_2$—$C_{10}$ monomer, the monomer being included in an amount sufficient to provide reaction of about 1.0 epoxide groups of the monomer for each acid (carboxyl) group of the ester, i.e, sufficient to react (esterify) all of the acid groups. If more monomer is used than necessary for this reaction, the excess may thereafter be removed, as would be apparent to one skilled in the art.

The aliphatic branched diol of this invention preferably contains only one primary hydroxyl group, the second hydroxyl of the diol is therefore preferably a secondary or tertiary hydroxyl, preferably a secondary hydroxyl. Additionally it is preferable that the hydroxyl groups not be on adjacent carbons and more preferably be separated by at least three carbon atoms. The carbon chain may also be interrupted or substituted by non-interfering functionality. Suitable $C_3$—$C_{10}$ aliphatic branched diols include but are not limited to, 2-ethyl-1,3 hexane diol, 1,3-butane diol, 1,2-butane diol and 1,2-propane diol, with 2-ethyl-1,3-hexane being most preferred. The choice of other suitable diols would be within the skill of one in the art. Mixtures of these diols can also be used.

The alkyl hexahydrophthalic anhydride preferably contains a lower alkyl group, i.e., an alkyl group having up to about seven carbons, preferably up to four carbons. Additionally, the alkyl group may be substituted or interrupted by non-interfering functionality. Suitable anhydrides useful in this invention include methyl hexahydrophthalic anhydride and the ethyl and propyl analogs, with methyl hexahydrophthalic anhydride being most preferred.

Suitable monoepoxide $C_2$—$C_{10}$ monomers useful in this invention include, but are not limited to, monoepoxides whose carbon chain may be interrupted by oxygen or be hydroxy substituted and glycidyl esters and glycidyl ethers. Examples of such monomers which may be used include alkylene oxides such as propylene oxide, ethylene oxide and 1,2-epoxy decane, styrene oxide, cyclohexene oxide, n-butyl glycidyl ether, glycidol acetate and glycidol. Since the preferred oligomer contains two hydroxyl groups, the preferred $C_2$—$C_{10}$ monomer will be mono-functional (i.e., the only reactive functionality will be the epoxide). The preferred monomer therefore has no hydroxyl functionality and is selected from mono-functional monoepoxides and glycidyl esters and glycidyl ethers having no hydroxyl functionality.

As would be apparent to one skilled in the art, suitable mixtures of these monomers could also be used.

In preparing the dihydroxy oligomers, the branched diol (a) and the anhydride (b) are combined and reacted at an elevated temperature for a time necessary to form the acid ester. This reaction product preferably consists of esters having two acid functionalities as would be the case wherein the diol and the anhydride are reacted in the 1:2 molar ratio. However, the reaction product can also consist of a mixture of diacid and monoacid esters as would result when the diol and anhydride are reacted in a ratio greater than 1:1 but less than 1:2. Subsequently, the epoxide containing monomer is added dropwise to the reaction mixture, generally in the presence of a catalyst, and the mixture is maintained at elevated temperatures for a time necessary to complete the esterification of the acid groups of the ester by the monomer. During this reaction step, the carboxyl group of the ester opens the epoxide ring of the monomer generating a hydroxyl group.

Preferred esterification catalysts for the carboxy/epoxy reaction useful in preparation of hydroxy functional oligomers are the tetraalkyl ammonium salts such as tetra methyl ammonium chloride, tetraethyl ammonium bromide and trimethyl benzyl ammonium chloride as well as metal salts of a carboxylic acid, such as potassium octoate or chromium III octoate. Other useful esterification catalysts include: metal halides such as chromium trichloride, ferric trichloride, and aluminum trichloride; mercaptans and thioethers such as octyl mercaptan, dimercapto propanol and dimercapto-diethyl ether; tertiary amines such as triethyl amine, pyridine, dimethylandine, quinoline, B-picoline, ethylpyridine; and the like. Still other catalysts known to catalyze carboxy/epoxy reactions will be apparent to those skilled in this art.

Various mixtures of these types of oligomers may also be employed within the scope of the compositions of the invention described herein.

Although the above reactions may be carried out with or without solvents, it is generally suitable and preferable, in order to achieve the preferred high solids level of the coating composition to use little or no solvent. However, when desirable, suitable solvents which may be employed include those commonly used, such as toluene, xylene, methyl amyl ketone, etc.

Crosslinking agent

A second component of the compositions of this invention is a crosslinking agent. The crosslinking agent may be an amino-aldehyde or a polyisocyanate.

Amine-aldehyde crosslinking agent.

Amine-aldehyde crosslinking agents suitable for cross-linking hydroxy functional bearing materials are well known in the art. Typically, these crosslinking materials are products of reactions of melamine, or urea with formaldehyde and various alcohols containing up to and including 4 carbon atoms. Preferably, the amine-aldehyde crosslinking agents useful in this invention are amine-aldehyde resins such as condensation products of formaldehyde with melamine, substituted melamine, urea, benzoguanamine or substituted benzoguanamine. Preferred members of this class are methylated melamine-formaldehyde resins such as hexamethoxymethylmelamine. These liquid crosslinking agents have substantially 100 percent nonvolatile content as measured by the foil method at 45°C. for 45 minutes. For the preferred high solids compositions of the invention it should be recognized that it is important not to introduce extraneous diluents that would lower the final solids content of the coating. Other suitable amine-aldehyde crosslinking agents are well known and would be apparent to one skilled in the art.

Particularly preferred crosslinking agents are the amino crosslinking agents sold by American Cyanamid under the trademark "Cymel". In particular, Cymel 301, Cymel 303, Cymel 325 and Cymel 1156, which are alkylated melamine-formaldehyde resins are useful in the compositions of this invention.

The crosslinking reactions are generally catalytically accelerated by acids. One such catalyst, for example, which may be so employed is p-toluene sulfonic acid, generally added to the composition in about .5% by weight based on the total weight of ester and crosslinking agent.

The amine-aldehyde materials function as a crosslinking agent in the composition of the invention by reacting with the hydroxy functionality of the oligomer and by reaction with hydroxy functionality on the hydroxy functional additive if such material is included in the composition.

In order to achieve the outstanding properties which make these coating compositions particularly useful as automotive topcoat materials, it is essential that the amount of amino crosslinking agent be sufficient to substantially completely crosslink the hydroxyl functionality in the coating composition. Therefore, the amino crosslinking agent should be included in the composition in an amount sufficient to provide at least 0.60 equivalents, preferably from 0.75 to 3.75 equivalents, of nitrogen crosslinking functionality for each equivalent of hydroxyl functionality included in the composition either as a hydroxyl group on the optional hydroxy functional additive or on the polyhydroxy oligomer.

Polyisocyanate crosslinking agent

The other major component of the thermosetting, coating composition of the invention is a polyisocyanate, i.e., a compound having 2 or more, preferably 3 or more, reactive isocyanate groups per molecule. This polyisocyanate crosslinking agent is included in the compositions of the invention in an amount sufficient to provide between about 0.5 and about 1.6 preferably between about .8 and 1.3, reactive isocyanate groups per hydroxy group in the composition. Most preferably the crosslinking agent is included in an amount sufficient to provide about 1.1 isocyanate groups per hydroxyl group in the composition.

Polyisocyanates are well known in the art and numerous suitable isocyanates having 2 or more reactive isocyanate groups per molecule will be apparent to those skilled in the art. Among the many suitable polyisocyanates are aliphatic, cycloaliphatic and aromatic isocyanate compounds. Representative of the numerous isocyanates which may be employed are (1) aliphatic diisocyanates such as trimethylene diisocyanate, tetramethylene diisocyanate, pentamethylene diisocyanate, hexamethylene diisocyanate, 1,2 propylene diisocyanate, 1,2 butylene diisocyanate, 2,3 butylene diisocyanate, 1,3 butylene diisocyanate, ethylidene diisocyanate, butylidene diisocyanate, 4,4'bis (isocyanate hexyl) methane, bis(2-isocyanate-ethyl) fumarate, 2,6-diisocyanate methyl caproate, 2,2,4(2,4,4)-trimethylhexamethylene diisocyanate, and dimer acid diisocyanates; (2) cycloaliphatic diisocyanates such as 1,3 cyclopentane diisocyanate, 1,4 cyclopentane diisocyanate, 1,2 cyclopentane diisocyanate, and methylcyclohexylene diisocyanate; (3) aromatic diisocyanates such as m-phenylene diisocyanate, p-phenylenidiisocyanate, 4,4'diphenyl diisocyanate, 1,5 methylene diisocyanate, 1,4 napthalene dissocyanate; (4) aliphatic/aromatic diisocyanates such as 4,4'diphenylenemethane diisocyanates, 2,4 or 2,6 toluene diisocyanate 4,4'-toluidene diisocyanate, 1,4 xylylene diisocyanate; (5) nuclear substituted aromatic compounds such as dianisidine diisocyanate, 4,4'diphenylether diisocyanate, chlorodiphenylene diisocyanate; (6) triisocyanates such as triphenylmethane 4,4', 4, 4" triisocyanate, 1, 3, 5 triisocyanate benzene, 2,4, 6 triisocyanate toluene; (7) tetraisocyananates such as 4,4' diphenyl dimethylmethane 2,2', 5,5' tetraisocyanate; (8) polymerized isocyanates such as tolylene diisocyanate dimers and trimers and the like; and (9) polyisocyanates such as prepolymers derived from a polyol, including polyether polyols or polyester polyols (including polyethers which are reacted with excess polyisocyanates to form isocyanate terminated prepolymers), simple polyols such as glycols (e.g., ethylene glycol, propylene glycol), other polyols such as glycerol, trimethylol propane, hexane triol, pentaerythritol and the like, as well as monoethers, e.g. diethylene glycol, tripropylene glycol and the like and polyethers, i.e, alkylene oxide condensates of the above.

Especially preferred for use in the compositions of the invention are trimerized products of aliphatic diisocyanates such as 1,6 hexamethylene diisocyanate. Still another particularly preferred type of crosslinking agent is a polyisocyanate having a biuret structure. This type of polyisocyanate is well known as are methods for making the same. One such polyisocyanate crosslinking agent is a high molecular weight biuret of 1,6 hexamethylene diisocyanate sold by Mobay Chemical Company under the tradename Desmodur N. Exemplary of other biuret type polyisocyanates are those prepared in accordance with U.S. Patent 3,976,622 to Wagner et al.

Optional hydroxy functional additive

Additional hydroxyl functionality other than that present on the polyhydroxy oligomer may be achieved by adding a hydroxy functional additive in amounts up to about 50 weight percent based on the total of the two above discussed components and the hydroxy functional additive itself. Such a material serves to provide additional hydroxy functional additives so as to provide a more intimate crosslinked structure in the final cured product. The hydroxy functional additives useful in the compositions are preferably selected from various polyols having a number average molecular weight ($\overline{M}_n$) of between about 150 and about 6000, preferably between about 400 and 2500. As used herein the term polyol means a compound having two or more hydroxyl groups.

The polyols useful in the invention preferably are selected from the group consisting of: functional polyesters; (ii) hydroxy functional polyethers; (iii) hydroxy functional oligoesters, (iv) monomeric polyols; (v) hydroxy functional copolymers produced by free radial polymerization of monoethylenically unsaturated monomers, one of which bears hydroxy functionality and which is included in the copolymer in an amount ranging from about 10 to about 50 weight percent, and (vi) mixtures of (i)—(v).

U.S. Patent 4,181,784 to Chattha et al teaches a high solids paint composition comprising an optional hydroxy functional additive. This patent is hereby expressly incorporated by reference as detailing hydroxy functional additives representative of those which are suitable for use as such in the composition of this invention. The following presents a brief description of the optional hydroxy functional additives.

The hydroxy functional polyesters useful in the invention are preferably fully saturated products prepared from aliphatic dibasic acids containing 2—20 carbon atoms, and short chain glycols of up to and including 21 carbon atoms. The molecular weight of these materials ranges from about 200 to about 2500 and the hydroxyl number ranges from about 30 to about 230.

Among preferred polyesters are products derived from esterification of ethylene glycol and 1,4 butane diol with adipic acid, ethylene glycol and 1,2 propylene glycol with adipic acid, azelaic acid and sebacic acid copolyester diols and mixtures thereof.

Among useful polyether diols are polytetramethylene ether glycol, polyethylene glycol, polypropylene glycol and the like.

The hydroxy functional oligoesters useful as hydroxy functional additives in the compositions of the invention are oligoesters preferably having a molecular weight of between about 150 and about 3000. Such oligoesters may be selected from the group consisting of: (i) oligoesters prepared by reacting a dicarboxylic acid with a monoepoxide, such as an alkylene oxide; (ii) oligoesters prepared by reacting a polyepoxide with a monocarboxylic acid; and (iii) oligoesters prepared by reacting a hydroxy functional monocarboxylic acid with either a mono- or polyepoxide.

Oligoester (i) is prepared by reacting a dibasic carboxylic acid with a monoepoxide, preferably include those formed by reacting $C_6$—$C_{12}$ dicarboxylic aliphatic acids with ethylene oxide or propylene oxide.

The preparation of oligoesters from carboxylic acids and polyepoxides is well known and is described, for example, in U.S. Patent Nos. 2,456,408 and 2,653,141. Numerous hydroxy functional oligoesters within this general category will be apparent to those skilled in the art. The third type of hydroxy functional oligoester, i.e., those prepared by reaction of a hydroxy functional monocarboxylic acid with an epoxide is described in U.S. Patent 3,404,018. While the epoxides employed in accordance with the teachings of that patent are polyepoxides, oligoesters may be prepared in a similar manner to that described therein by employing a monoepoxide, such as an alkylene oxide, and a hydroxy functional monocarboxylic acid as described therein.

Among the numerous monomeric polyols which may be employed as the hydroxy functional additive are the various short chain glycols of up to and including 21 carbon atoms which are useful in preparing the hydroxy functional polyesters discussed above. Other conventional polyhydric alcohols such as glycerols and sugar alcohols are also among the numerous monomeric polyols which will be apparent to those skilled in the art.

The hydroxy bearing copolymer useful as the hydroxy functional additive may be formed from monoethylenically unsaturated monomers, with between about 10 and about 50 weight percent bearing hydroxyl functionality.

Although one of ordinary skill in the art will recognize that many different hydroxy bearing monomers could be employed, the preferred hydroxy functional monomers for use in the hydroxy functional resin of the invention are $C_5$—$C_7$ hydroxy alkyl acrylates and/or $C_6$—$C_8$ hydroxy alkyl methacrylates, i.e., esters of $C_2$—$C_3$ dihydric alcohols and acrylic or methacrylic acids.

The remainder of the monomers forming the hydroxy functional copolymer, i.e., between about 90 and about 50 weight percent of the monomers of the copolymer, are other monoethylenically unsaturated monomers. These monoethylenically unsaturated monomers are preferably alpha-beta olefinically unsaturated monomers, i.e., monomers bearing olefinic unsaturation between the two carbon atoms in the alpha and beta positions with respect to the terminus of an aliphatic carbon-to-carbon chain.

Other materials

In addition to the above discussed components, other materials may be included in the coating compositions of the invention. These include materials such as catalysts, antioxidants, U.V. absorbers, solvents, surface modifiers and wetting agents as well as pigments. The solvents used in the coating compositions of the invention are those which are commonly used. Typical solvents useful in the coating compositions facilitate spray application at high solids content and include toluene, xylene, methyamyl ketone, acetone, 2-ethoxy-1-ethanol, 2-butoxy-1-ethanol, diacetone alcohol, tetrahydrofuran, ethylacetate, dimethylsuccinate, dimethylglutarate, dimethyladipate or mixtures thereof. The solvent in which the polyhydroxy functional oligomer of the coating composition is prepared, may be employed as the solvent for the coating composition thus eliminating the need for drying the oligomer after preparation, if such is desired. As mentioned above, the nonvolatile solids content of the high solids coating composition is preferably at least 60%, and more preferably 70% or more, thus limiting the amount of solvent included in the composition. The subject paint composition may comprise 100% solids thereby including no solvent. However, while the polyhydroxy oligomers of the subject invention are particularly suitable for making high solids coatings, they are also suitable for use in compositions that are not high solids compositions. Determination of optimal solids content for a given application would be within the skill of one in the art.

Surface modifiers or wetting agents are common additives for liquid paint compositions. The exact mode of operation of these surface modifiers is not known, but it is thought that their presence contributes to better adhesion of the coating composition to the surface being coated and helps formation of thin coatings, particularly on metal surfaces. These surface modifiers are exemplified by acrylic polymers containing 0.1—10 percent by weight of a copolymerized monoethylenically unsaturated carboxylic acids such as methacrylic acid, acrylic acid or itaconic acid, cellulose acetate butyrate, silicone oils or mixtures thereof. Of course, the choice of surface modifiers or wetting agent is dependent upon the type of surface to be coated and selection of the same is clearly within the skill of the artisan.

The coating composition of the invention also may include pigments. The amount of pigment in the coating composition may vary, but preferably is between about 3 and about 45 weight percent based on the total weight of the paint composition. If the pigment is metallic flake, the amount ranges from about 1 to about 20 weight percent.

For many applications of the coating compositions of the invention, particularly high solids compositions, it may be desirable to employ flow control additives to provide sag free coatings. Among numerous such materials, NAD's such as described by Porter (S. Porter, Jr., and B. N. McBane, U.S. Patent 4,025,474, May 24, 1977) are compatible with these oligomeric coating compositions. These particle dispersions may be included in an amount up to 15% by weight of the total composition. Other types of NAD's such as described by D. L. Maker and S. C. Peng (U.S. Patent 3,814,721, June 4, 1974) also may be included in the paint composition.

Application techniques

The coating composition can be applied by conventional methods known to those in the art. These methods include roller coating, spray coating, dipping or brushing and, of course, the particular application technique chosen will depend on the particular substrate to be coated and the environment in which the coating operation is to take place.

A particularly preferred technique for applying a high solids coating compositions, particularly when applying the same to automobiles as topcoats, is spray coating through the nozzle of a spray gun.

In accordance with this preferred technique, the polyhydroxy oligomer and the optional hydroxy functional copolymer along with other additives such as pigments, U.V. absorbers, antioxidants and other nonreactive materials are admixed with a solvent. These materials are fed as one component of a two component system into a spray gun which combines the materials as they are sprayed onto tha automobile substrate. The other material is the polyisocyanate crosslinking agent, which may or may not be cut with a suitable nonreactive solvent.

High solids paints have in the past caused some difficulty in spray coating techniques because of the high viscosity of the materials and resultant problems in clogging of spray guns. However, because the compositions of this invention can demonstrate relatively low viscosity, considering the preferred high solids content, they can be applied by spray coating techniques.

The invention will be further understood by referring to the following detailed examples. It should be understood that the specific examples are presented by way of illustration and not by way of limitation. Unless otherwise specified, all references to "parts" are intended to mean parts by weight.

Example 1

Methylhexahydrophthalic anhydride (1685g) and 2-ethyl-1,3-hexanediol (731g) are placed in a 5 litre flask and the reaction mixture is heated slowly (2 hours) to 100°C. The reaction mixture is stirred at this temperature for five hours. The flask is fitted with a cold water condenser and a solution of Cordova Accelerator AMC™-2 (available from Cordova Chemical Company), (7g) in propylene oxide (850 g) is added dropwise with continuous stirring and heating. After the addition is complete, the reaction mixture is heated 100°C for five hours. Excess propylene oxide is then removed under reduced pressure.

Sixty-five (65) parts of the above oligomer, 43 parts of Cymel 325 (American Cyanamid Co.) and 1 part of phenyl acid phosphate are dissolved in 37 parts of butyl acetate. The resulting formulation is applied by spraying to primed steel panels which are baked at 130°C for 20 minutes to obtain coatings with excellent hardness, adhesion and gloss and solvent (xylene and methyl ethyl ketone) resistance.

Example 2

Seven (7) parts of aluminum flakes (65%) in naphtha) are mixed with the paint composition described in Example 1. The resulting formulation is applied by spraying to primed steel panels which are baked at 130°C for 18 minutes to obtain silver metallic coatings with excellent hardness, adhesion and solvent (xylene and methyl ethyl ketone) resistance.

Example 3

Methylhexahydrophthalic anhydride (1008g) and 2-ethyl-1,3-hexanediol (437 g) are placed in a three litre flask and the reaction mixture is stirred at 100°C for five hours. Four grams of Cordova Accelerator AMC™-2 are dissolved in 782 grams of n-butylglycidyl ether and added dropwise with continuous stirring. After the addition is complete, the reaction mixture is stirred at 100°C for five hours.

Seventy-two (72) parts of the above oligomer, 37 parts of Cymel 301 (American Cyanamid Co.) and 1.5 parts of butyl acid phosphate are dissolved in 41 parts of butyl acetate. The resulting formulation is applied by spraying to primed steel panels which are baked at 132°C for 20 minutes to obtain coatings with excellent gloss, hardness, adhesion and solvent (xylene and methyl ethyl ketone) resistance.

Example 4

One hundred and fifteen (115) parts of the oligomer from Example 3 are dissolved in 133 parts of methyl amyl ketone and 410 parts of titanium dioxide are added under agitation to this solution. The mixture is whipped with a Cowl's blade at 90 cycles per second for half an hour.

Forty-nine parts of the above millbase, 30 parts of the oligomer from Example 3, and 27 parts of Cymel 301 (American Cyanamid Co.) are mixed with 21 parts of butyl acetate. A 50% solution (0.5 parts) of p-toluene sulfonic acid in 2-propanol is added to the above mixture and the resulting formulation is applied by spraying to primed steel panels. The panels are baked at 128°C for 20 minutes to obtain hard, glossy and solvent resistant (xylene and methyl ethyl ketone) coatings.

Example 5

Eleven (11) parts of caprolactone based hydroxy ester PCP-0300 (Union Carbide), 6 parts of hexabutoxymethyl melamine (Cymel 1156, American Cyanamid) and 7 parts of methyl amyl ketone are added to the formulation described in Example 1. The resulting formulation is applied by spraying to primed steel panels which are baked at 135°C for 17 minutes to obtain coatings with promising physical properties.

Example 6

Ten (10) parts of hydroxy polymer Acryloid OL-42 (Rohm and Haas Chemical Co.) and seven parts of ethoxymethoxy benzoguanamine (Cymel 1123, American Cyanamid) and five parts of methyl amyl ketone are added to the formulation described in Example 1. The resulting formulation is applied by spraying to primed steel panels which are baked at 135°C for 18 minutes to obtain coatings with excellent hardness, adhesion and solvent (xylene and methyl ethyl ketone) resistance.

Example 7 .

A hydroxy acrylic polymer ($\bar{M}_n$=2200) is prepared by solution polymerization technique in methyl amyl ketone (60% solids by weight) comprising hydroxyethyl acrylate (30%), isobutyl methacrylate (45%) and styrene (25%).

Sixteen parts of this polymer solution, seven parts of Cymel 301 and five parts of butyl acetate are added to the paint composition described in Example 3. The resulting formulation is applied by spraying to primed steel panels which are baked at 130°C for 20 minutes to obtain coatings with excellent gloss, hardness, adhesion and solvent (xylene and methyl ethyl ketone) resistance.

Example 8

Methylhexahydrophthalic anhydride (330g) 1,3-butanediol (90g) and butylglycidyl ether (260g) were reacted in the presence of Cordova Acclerator AMC™-2 (5g) by following the procedure described in Example 3.

Fifty-five (55) parts of the above oligomer, 42 parts of Cymel 301 and 1.6 parts of 2-hydroxycyclohexyl p-toluene sulfonate are dissolved in 37 parts of butyl acetate. The resulting formulation is applied by spraying to primed steel panels which are baked at 140°C for 20 minutes to obtain coatings with excellent hardness, adhesion, gloss and solvent (xylene and methyl ethyl ketone) resistance.

Example 9

Nine (9) parts of nonaqueous dispersed particles (42% by weight), prepared as described in Example A of U.S. Patent 4,025,474, are added to the composition described in Example 2. The resulting formulation is applied by spraying to primed steel panels which are then baked at 130°C for 19 minutes to obtain silver metallic coatings with excellent hardness, adhesion and solvent (xylene and methyl ethyl ketone) resistance.

Example 10

Methylhexahydrophthalic anhydride (1685g) and 2-ethyl-1,3-hexandiol (731g) are placed in a 5 litre flask and the reaction mixture is heated slowly (2 hours) to 100°C. The reaction mixture is stirred at this temperature for five hours. The flask is fitted with a cold water condenser and a solution of Cordova Accelerator AMC™-2 (available from Cordova Chemical Company), (7g) in propylene oxide (850g) is added dropwise with continuous stirring and heating. After the addition is complete, the reaction mixture is heated 100°C for five hours. Excess propylene oxide is then removed under reduced pressure.

Fifty-seven (57) parts of the above oligomer and 42 parts of Desmodur-N-100 (Mobay Chemical Company) were dissolved in 27 parts of butyl acetate and 0.5 parts of dibutyltin dilaurate are added to it. The resulting formulation is immediately applied by spraying to primed steel panels. The panels are baked at 110°C for 17 minutes to obtain coatings with excellent hardness, adhesion, gloss and solvent resistance.

Example 11

Seven (7) parts of aluminum flakes (65% in naphtha) are mixed with 55 parts of the oligomer from Example 10 and 26 parts of Desmodur-N-100 (Mobay Chemical Company), 24 parts of n-butyl acetate and 0.45 parts of dibutyltin dilaurate are added to the above mixture; the resulting formulation is applied by spraying to primed steel panels. The panels are baked at 105°C for 20 minutes to obtain silver metallic coatings with excellent hardness, adhesion, and solvent (xylene and methyl ethyl ketone) resistance.

Example 12

Methylhexahydrophthalic anhydride (1008g) and 2-ethyl-1,3-hexanediol (437g) are placed in a three litre flask and the reaction mixture is stirred at 100°C for five hours. Four grams of Cordova Accelerator AMC™-2 are dissolved of 782 grams of n-butylglycidyl ether and added dropwise with continuous stirring. After the addition is complete, the reaction mixture is stirred at 100°C for five hours.

Fifty-two (52) parts of the above oligomer and 0.37 parts of dibutyltin dilaurate are dissolved in 24 parts of n-butyl acetate. Twenty-nine (29) parts of Desmodur-N-100 (Mobay Chemical Company) are added to the above solution and the resulting formulation is applied by spraying to primed steel panels. The panels are baked at 110°C for 17 minutes to obtain hard, glossy coatings with excellent adhesion and solvent (xylene and methyl ethyl ketone) resistance.

Example 13

Ten (10) parts of caprolactone based hydroxy ester PCP-0300 (Union Carbide) and 4.5 parts of isophoronediisocyanate are added to the formulation described in Example 10. The resulting composition is applied by spraying to primed steel panels which are baked at 105°C for 18 minutes to obtain coatings with excellent hardness, adhesion, gloss and solvent resistance.

Example 14

One hundred and fifteen (115) parts of the oligomer from Example 12 are dissolved in 133 parts of methyl amyl ketone and 410 parts of titanium dioxide are added under agitation to this solution. The mixture is whipped with a Cowl's blade at 90 cycles per second for one half hour.

Fifty (50) parts of the above millbase, 29 parts of the oligomer from Example 3 and 0.4 parts of dibutyltin are mixed with 26 parts of n-butyl acetate. Twenty-nine (29) parts of Desmodur-N-100 (Mobay Chemical Company) are added to the above mixture and the resulting formulation is applied by spraying to primed steel panels. The panels are baked at 105°C for 16 minutes to obtain white coatings with excellent hardness, adhesion, gloss and solvent (xylene and methyl ethyl ketone) resistance.

Example 15

A hydroxy acrylic polymer ($\bar{M}_n$=2200) is prepared by solution polymerization technique in methyl amyl ketone (60% solids by weight) comprising hydroxyethyl acrylate (30%) isobutyl methacrylate (45%) and styrene (25%).

Twelve (12) parts of the above polymer, 56 parts of the oligomer from Example 10 and 0.55 parts of dibutyltin dilaurate are dissolved in 29 parts of butyl acetate. A solution of 40 parts of Desmodur-N-100 (Mobay Chemical Company) and 4.5 parts of isophoronediisocyanate in 15 parts of n-butyl acetate is added to the above solution and the resulting formulation is applied by spraying to primed steel panels. The panels are baked at 105°C for 19 minutes to obtain coatings with excellent hardness, adhesion, gloss and solvent (xylene and methyl ethyl ketone) resistance.

Example 16

Forty-nine (49) parts of the oligomer from Example 12, eleven (11) parts Acryloid OL-42 (Rohm and Haas) Chemical Company) and 0.6 parts of dibutyltin dilaurate are dissolved in 31 parts of butyl acetate. Twenty-seven parts of Desmodur-N-100 and three parts of isophoronediisocyanate are dissolved in 10 parts of butyl acetate and this solution is mixed with the above solution. The resulting formulation is applied by spraying to primed steel panels, which are baked at 110°C for 20 minutes to obtain coatings with excellent hardness, adhesion, gloss and solvent (xylene and methyl ethyl ketone) resistance.

Example 17

Thirty-six (36) parts of the oligomer from Example 12 and 42 parts of isophoronediisocyanate adduct T 1890 (Chemische Werke Huls AG) are dissolved in 35 parts of butyl acetate and 0.5 parts of dibutyltin dilaurate are added to it. The resulting formulation is applied by spraying to primed steel panels, which are baked at 100°C for 18 minutes to obtain coatings with excellent hardness, adhesion, gloss and solvent (xylene and methyl ethyl ketone) resistance.

Example 18

Methylhexahydrophthalic anhydride (336g), 1,3-butanediol (90g) and butylglycidyl ether (260g) are reacted in the presence of Cordova Accelerator AMC™-2 (0.5 g) by following the procedure described in Example 12.

Forty-two (42) parts of the above oligomer and 36 parts of Desmodur-N-100 (Mobay Chemical Company) are dissolved in 32 parts of n-butyl acetate and 0.5 parts of dibutyltin dilaurate is added to the solution. The resulting composition is applied by spraying to primed steel panels which are baked at 110°C for 19 minutes to obtain coatings with excellent hardness, gloss, solvent resistance.

Example 19

Six (6) parts of nonaqueous dispersion (42% solids by weight and prepared according to Example A of U.S. Patent 4,025,474) are blended with seven parts of aluminum flakes (65% in naphta), 55 parts of the oligomer from Example 10, 37 parts of n-butyl acetate and 0.5 of dibutyl tin dilaurate. Twenty seven (27) parts of desmodur-N-100 (Mobay Chemical Company) are added to the above composition and the resulting formulation is applied by spraying to primed steel panels. The panels are baked at 110°C for 17 minutes to obtain silver metallic coatings with excellent physical properties.

**Claims**

1. A polyhydroxy oligomer having a number average ($\overline{M}_n$) molecular weight of from 300 to 2000 and comprising the reaction product of:

(i) an acid ester made by reacting:
(a) a $C_3$—$C_{10}$ aliphatic branched diol, and
(b) an alkyl hexahydrophthalic anhydride, wherein (a) and (b) are combined in the reaction mixture in amounts sufficient to result in reaction in a molar ratio of greater than 1:1 up to 1:2, and
(ii) a monoepoxide $C_2$—$C_{10}$ monomer, wherein said monomer is included in an amount sufficient to provide reaction of about 1.0 epoxide group for each acid group of said acid ester.

2. A coating composition according to claim 1 wherein said acid ester is a dicarboxylic acid ester made by combining said diol and said anhydride in the reaction mixture in amounts sufficient to result in reaction in a 1:2 molar ratio.

3. An oligomer according to claim 1 or claim 2 wherein the hydroxy groups of said diol are not attached to adjacent carbon atoms.

4. An oligomer according to claim 3, wherein said diol is 2-ethyl-1,3-hexane diol.

5. An oligomer according to any one of claims 1 to 4 wherein the alkyl group of said alkyl hexahydrophthalic anhydride comprises a lower alkyl group having up to seven carbons.

6. An oligomer according to claim 5 wherein said anhydride is methyl hexahydrophthalic anhydride.

7. An oligomer according to any one of claims 1 to 6 wherein said monoepoxide $C_2$—$C_{10}$ monomer is selected from monoepoxides, glycidyl ethers, glycidyl ethers, and mixtures thereof.

8. An oligomer according to claim 7 wherein the monoepoxide monomer is propylene oxide.

9. An oligomer according to any one of claims 1 to 8 wherein said monoepoxide $C_2$—$C_{10}$ monomer contains no hydroxyl functionality.

10. An oligomer according to any one of claims 1 to 9 wherein said polyhydroxy oligomer is a dihydroxy oligomer.

11. A coating composition comprising:
(A) a polyhydroxy oligomer according to any one of claims 1 to 10;
(B) a crosslinking agent; and
(C) 0—50 weight percent based on the total weight of (A), (B) and (C) of a hydroxy functional additive having a number average molecular weight ($\overline{M}_n$) of from 150 to 6000.

12. A coating composition according to claim 11 wherein the crosslinking agent is an amine-aldehyde and is included in said composition in an amount sufficient to provide at least 0.60 equivalents of nitrogen crosslinking functionality for each equivalent of hydroxyl functionality included in said composition either on said polyhydroxy oligomer or as a hydroxyl group of said hydroxy functional additive.

13. A coating composition according to claim 12 wherein said amine-aldehyde crosslinking agent is selected from condensation products of formaldehyde with melamine, substituted melamine, urea, benzoguanamine and substituted benzoguanamine, and mixtures of said condensation products in an amount sufficient to provide from 0.75 to 3.75 equivalents of nitrogen crosslinking functionality for each equivalent of hydroxy functionality included in said composition either on said polyhydroxy oligomer or as a hydroxyl group of said hydroxy functional additive.

14. A coating composition according to claim 11 wherein the crosslinking agent comprises a polyisocyanate and is included in the compositions in an amount sufficient to provide from 0.5 to 1.6 reactive isocyanate groups per hydroxy group present in the composition either on the polyhydroxy oligomer or as an hydroxyl group of the hydroxy functional additive.

15. A coating composition according to claim 14 wherein said polyisocyanate crosslinking agent is included in said composition in an amount sufficient to provide from 0.8 to 1.3 reactive isocyanate groups per hydroxyl group in said composition.

16. A coating composition according to claim 14 or 15 wherein said polyisocyanate crosslinking agent is a diisocyanate.

17. A coating composition according to claim 14 or 15 wherein said polyisocyanate crosslinking agent has 3 or more reactive isocyanates per molecule.

18. A coating composition according to claim 17 wherein said polyisocyanate crosslinking agent is a trimerized product of an aliphatic.

19. A coating composition according to claim 18 wherein said polyisocyanate crosslinking agent is a trimerized reaction product of 1,6 hexamethylene diisocyanate.

20. A coating composition according to claim 17 wherein said polyisocyanate crosslinking agent is a polyisocyanate having biuret structure.

21. A coating composition according to any one of claims 1 to 20 wherein said hydroxy functional additive is a polyol selected from (i) hydroxy functional polyesters, (ii) hydroxy functional polyethers, (iii) hydroxy functional oligoesters, (iv) monomeric polyols, (v) hydroxy functional copolymers formed from monoethylenically unsaturated monomers, one or more of which bears hydroxy functionality and which is included in said copolymer in amounts ranging from 10 to 50 weight percent of said copolymer, and (vi) mixtures of (i)—(v).

22. A coating composition according to any one of claims 11 to 21 wherein said composition further comprises up to 15 weight percent, based on the total weight of said composition, of a flow control additive.

23. A coating composition according to any one of claims 11 to 22 which contains at least 60 percent by weight of nonvolatile solids.

**Patentansprüche**

1. Polyhydroxyoligomere mit einem zahlenmittleren Molekulargewicht ($\bar{M}_n$) von 300 bis 2000, bestehend aus dem Reaktionsprodukt von

(i) einem sauren Ester, hergestellt durch Umsetzung von
   (a) einem alphatischen verzweigten $C_3$—$C_{10}$-Diol und
   (b) einem Alkylhexahydrophthalsäureanhydrid, wobei (a) und (b) im Reaktionsgemisch in genügender Menge zusammengebracht werden, um bei der Reaktion ein Molverhältnis grösser als 1:1 bis zu 1:2 zu ergeben, und
(ii) einem Monoepoxid-$C_2$—$C_{10}$-monomeren, wobei dieses Monomer in einer genügenden Menge zugesetzt wird, um ungefähr 1,0 Epoxidgruppe je saure Gruppe des besagten sauren Esters zur Reaktion zu bringen.

2. Beschichtungszusammensetzung nach Anspruch 1, worin besagter saurer Ester ein Dicarbonsäureester ist, der durch Zusammenbringen dieses Diols und dieses Anhydrids im Reaktionsgemisch in genügenden Mengen hergestellt wurde, um bei der Reaktion ein Molverhältnis von 1:2 zu ergeben.

3. Oligomer nach Anspruch 1 oder 2, worin die Hydroxylgruppen dieses Diols nicht an benachbarte Kohlenstoffatome gebunden sind.

4. Oligomer nach Anspruch 3, worin dieses Diol 2-Aethyl-1,3-hexandiol ist.

5. Oligomer nach einem der Ansprüche 1 bis 4, worin die Alkylgruppe jenes Alkylhexahydrophthalsäureanhydrids eine Niederalkylgruppe mit bis zu sieben Kohlenstoffatomen darstellt.

6. Oligomer nach Anspruch 5, worin dieses Anhydrid Methylhexahydrophthalsäureanhydrid ist.

7. Oligomer nach einem der Ansprüche 1 bis 6, worin besagtes Monoepoxid-$C_2$—$C_{10}$-monomer unter Monoepoxiden, Glycidyläthern, Glycidylestern und deren Gemischen ausgewählt ist.

8. Oligomer nach Anspruch 7, worin das Monoepoxidmonomer Propylenoxyd ist.

9. Oligomer nach einem der Ansprüche 1 bis 8, worin dieses Monoepoxyd-$C_2$—$C_{10}$-monomer keine Hydroxylfunktionalität besitzt.

10. Oligomer nach einem der Ansprüche 1 bis 9, worin besagtes Polyhydroxyoligomer ein Dihydroxyoligomer ist.

11. Beschichtungszusammensetzung, bestehend aus:
   (A) einem Polyhydroxyoligomer nach einem der Ansprüche 1 bis 10,
   (B) einem Vernetzungsmittel und
   (C) 0—50 Gewichtsprozent bezogen auf das Gesamtgewicht von (A), (B) und (C) eines hydroxyfunktionellen Zusatzes mit einem zahlenmittleren Molekulargewicht ($M_n$) von 150 bis 6000.

12. Beschichtungszusammensetzung nach Anspruch 11, worin das Vernetzungsmittel ein Amin-Aldehyd ist und dieser Zusammensetzung in einer genügenden Menge zugesetzt wird, um mindestens 0,60 Stickstoffvernetzungsfunktionsäquivalente pro in dieser Zusammensetzung entweder auf jenem Polyhydroxyoligomeren oder als Hydroxylgruppe auf jenem hydroxyfunktionellen Zusatz vorhandenes Hydroxylfunktionalitätsäquivalent zu ergeben.

13. Beschichtungszusammensetzung nach Anspruch 12, worin dieses Amin-Aldehydvernetzungsmittel unter Kondensationsprodukten des Formaldehyds mit Melamin, substituiertem Melamin, Harnstoff, Benzoguanamin und substituiertem Benzoguanamin sowie Gemischen solcher Kondensationsprodukte in einer genügenden Menge ausgewählt wird, um 0,75 bis 3,75 Stickstoffvernetzungsfunktionsäquivalente pro in dieser Zusammensetzung entweder auf jenem Polyhydroxyoligomeren oder als Hydroxylgruppe auf jenem hydroxylfunktionellen Zusatz vorhandenes Hydroxylfunktionalitätsäquivalent zu ergeben.

14. Beschichtungszusammensetzung nach Anspruch 11, worin das Vernetzungsmittel aus einem Polyisocyanat besteht und den Zusammensetzungen in genügender Menge zugesetzt wird, um 0,5 bis 1,6 reaktive Isocyanatgruppen pro in der Zusammensetzung entweder auf dem Polyhydroxyoligomeren oder als Hydroxylgruppe auf dem hydroxyfunktionellen Zusatz vorhandene Hydroxylgruppe zu ergeben.

15. Beschichtungszusammensetzung nach Anspruch 14, worin dieses Polyisocyanatvernetzungsmittel jener Zusammensetzung in einer genügenden Menge zugesetzt wird, um 0,8 bis 1,3 reaktive Isocyanatgruppen pro Hydroxylgruppe in dieser Zusammensetzung zu ergeben.

16. Beschichtungszusammensetzung nach Anspruch 14 oder 15, worin als solches Polyisocyanatvernetzungsmittel ein Diisocyanat vorliegt.

17. Beschichtungszusammensetzung nach Anspruch 14 oder 15, worin dieses Polyisocyanatvernetzungsmittel 3 oder mehr reaktive Isocyanate pro Molekül aufweist.

18. Beschichtungszusammensetzung nach Anspruch 17, worin dieses Polyisocyanatvernetzungsmittel ein trimerisiertes Produkt eines aliphatischen Isocyanats ist.

19. Beschichtungszusammensetzung nach Anspruch 18, worin dieses Polyisocyanatvernetzungsmittel ein trimerisiertes Reaktionsprodukt aus 1,6-Hexamethylendiisocyanat ist.

20. Beschichtungszusammensetzung nach Anspruch 17, worin dieses Polyisocyanatvernetzungsmittel ein Polyisocyanat mit Biuretstruktur ist.

21. Beschichtungszusammensetzung nach einem der Ansprüche 1 bis 20, worin dieser hydroxyfunktionelle Zusatz ein unter (i) hydroxyfunktionellen Polyestern, (ii) hydroxyfunktionellen Polyäthern, (iii) hydroxyfunktionellen Oligoestern, (iv) monomeren Polyolen, (v) hydroxyfunktionellen Copolymeren, die aus monoäthylenisch ungesättigten Monomeren gebildet sind, von denen eines oder mehrere Hydroxyfunktionalität tragen und in diesen Copolymeren in Mengen im Bereich von 10 bis 50 Gewichtsprozent auf besagtes Copolymer vorliegen, sowie (vi) Gemischen aus (i)—(v) ausgewähltes Polyol ist.

22. Beschichtungszusammensetzung nach einem der Ansprüche 11 bis 21, worin diese Zusammensetzung ferner bis zu 15 Gewichtsprozent, bezogen auf das Gesamtgewicht dieser Zusammensetzung, eines Verlaufmittels enthält.

23. Beschichtungszusammensetzung nach einem der Ansprüche 11 bis 22, welche mindestens 60 Gewichtsprozent nichtflüchtige Feststoffe enthält.

**Revendications**

1. Un oligomère polyhydroxylé ayant un poids moléculaire de moyenne numérique $(\overline{M}_n)$ comprise entre 300 et 2000 et comprenant le produit de réaction de:

(i) un ester acide obtenu en faisant réagir:
  (a) un diol ramifié aliphatique en $C_3$—$C_{10}$ et
  (b) un anhydride alkylhexahydrophtalique, dans lequel (a) et (b) sont combinés dans le mélange réactionnel dans des quantités suffisantes pour résulter, en réaction, en un rapport molaire supérieur à 1:1 et allant jusqu'à 1:2, et
(ii) un monomère monoépoxydé en $C_2$—$C_{10}$, dans lequel ledit monomère est inclus en quantité suffisante pour assurer la réaction d'environ 1,0 groupe époxy pour chaque groupe acide dudit ester acide.

2. Une composition de revêtement selon la revendication 1 dans laquelle ledit ester acide est un ester acide dicarboxylique préparé en combinant ledit diol et ledit anhydride dans le mélange réactionnel en quantités suffisantes pour résulter, en réaction, en un rapport molaire de 1:2.

3. Un oligomère selon la revendication 1 ou la revendication 2 dans lequel les groupes hydroxyles dudit diol ne sont pas attachés à des atomes de carbone adjacents.

4. Un oligomère selon la revendication 3, dans lequel ledit diol est l'éthyle-2-hexanediol-1,3.

5. Un oligomère selon l'une quelconque des revendications 1 à 4 dans lequel le groupe alkyle dudit anhydride alkylhexahydrophtalique comprend un groupe alkyle inférieur ayant jusqu'à sept carbones.

6. Un oligomère selon la revendication 5 dans lequel ledit anhydride est l'anhydride méthylhexahydrophtalique.

7. Un oligomère selon l'une quelconque des revendications 1 à 6 dans lequel ledit monomère monoépoxydé en $C_2$—$C_{10}$ est choisi parmi les produits monoépoxydés, les esters glycidiques, les éthers glycidiques, et les mélanges de ceux-ci.

8. Un oligomère selon la revendication 7 dans lequel le monomère monoépoxydé est l'oxyde de propyléne.

9. Un oligomère selon l'une quelconque des revendications 1 à 8 dans lequel ledit monomère monoépoxydé en $C_2$—$C_{10}$ ne contient pas de fonctionnalité hydroxyle.

10. Un oligomère selon l'une quelconque des revendications 1 à 9 dans lequel ledit oligomère polyhydroxylé est un oligomère dihydroxylé.

11. Une composition de revêtement comprenant:
(A) un oligomère polyhydroxylé selon l'une quelconque des revendications 1 à 10;
(B) un agent de réticulation; et
(C) 0—50 pour cent en poids en se basant sur le poids total de (A), (B) et (C) d'un additif à fonctions hydroxyles ayant un poids moléculaire de moyenne numérique $(\overline{M}_n)$ comprise entre 150 et 6000.

12. Une composition de revêtement selon la revendication 11 dans laquelle l'agent de réticulation est un aldéhyde aminé et est inclus dans ladite composition en quantité suffisante pour assurer au moins 0,60 équivalents de fonctionnalité réticulant l'azote pour chaque équivalent de fonctionnalité hydroxyle inclus dans ladite composition soit sur ledit oligomère polyhydroxylé ou en tant que groupe hydroxyle dudit additif à fonctions hydroxyles.

13. Une composition de revêtement selon la revendication 12 dans laquelle ledit agent de réticulation aldéhyde aminé est choisi parmi les produits de condensation du formaldéhyde avec la mélamine, la mélamine substituée, l'urée, la benzoguanamine et la benzoguanamine substituée, et des mélanges desdits produits de condensation en quantité suffisante pour assurer de 0,75 à 3,75 équivalents de fonctionnalité réticulant l'azote pour chaque équivalent de fonctionnalité hydroxyle inclus dans ladite composition soit sur ledit oligomère polyhydroxylé soit en tant que groupe hydroxyle dudit additif à fonctions hydroxyles.

14. Une composition de revêtement selon la revendication 11 dans laquelle l'agent de réticulation comprend un polyisocyanate et est inclus dans les compositions en quantité suffisante pour assurer de 0,5 à 1,6 groupes isocyanates réactifs par groupe hydroxyle présent dans la composition soit sur l'oligomère polyhydroxylé soit en tant que groupe hydroxyle de l'additif à fonctions hydroxyles.

15. Une composition de revêtement selon la revendication 14 dans laquelle ledit agent de réticulation polyisocyanate est inclus dans ladite composition en quantité suffisante pour assurer de 0,8 à 1,3 groupes isocyanates réactifs par groupe hydroxyle dans ladite composition.

16. Une composition de revêtement selon la revendication 14 ou la revendication 15 dans laquelle ledit agent de réticulation polyisocyanate est un diisocyanate.

17. Une composition de revêtement selon la revendication 14 ou la revendication 15 dans laquelle ledit agent de réticulation polyisocyanate comporte trois isocyanates réactifs ou plus par molécule.

18. Une composition de revêtement selon la revendication 17 dans laquelle l'agent de réticulation polyisocyanate est un produit trimérisé d'un aliphatique.

19. Une composition de revêtement selon la revendication 18 dans laquelle ledit agent de réticulation polyisocyanate est un produit de réaction trimérisé de l'héxaméthylènediisocyanate-1,6.

20. Une composition de revêtement selon la revendication 17 dans laquelle ledit agent de réticulation polyisocyanate est un polyisocyanate ayant la structure du biuret.

21. Une composition de revêtement selon l'une quelconque des revendications 1 à 20 dans laquelle ledit additif à fonctions hydroxyles est un polyol choisi parmi (i) les polyesters à fonctions hydroxyles, (ii) les polyéthers à fonctions hydroxyles, (iii) les oligoesters à fonctions hydroxyles, (iv) les polyols monomères, (v) les copolymères à fonctions hydroxyles formés à partir de monomères à insaturation mono-éthylénique, l'un ou plusieurs desquels portent une fonctionnalité hydroxyle, et est ou sont inclus dans ledit copolymère en quantité allant de 10 à 50 pour cent en poids dudit copolymère, et (vi) des mélanges de (i)—(v).

22. Une composition de revêtement selon l'une quelconque des revendications 11 à 21 dans laquelle ladite composition comprend en outre jusqu'à 15 pour cent en poids, en se basant sur le poids total de ladite composition, d'un additif de contrôle de l'écoulement.

23. Une composition de revêtement selon l'une quelconque des revendications 11 à 22 qui contient au moins 60 pour cent en poids de solides non volatils.